# EUROPEAN PATENT SPECIFICATION

(11) **EP 0 722 046 B1**
(45) Date of publication and mention of the grant of the patent: **20.09.2000**
(21) Application number: 95850209.8
(22) Date of filing: 27.11.1995
(51) Int. Cl.: F15B 15/08, B23Q 1/26

(54) **Device for guiding a linear movement**
Vorrichtung zum Führen einer Linearbewegung
Dispositif de guidage d'un mouvement linéaire

(30) Priority: 19.12.1994 SE 9404412
(43) Date of publication of application: 17.07.1996
(73) Proprietor: AKTIEBOLAGET REXROTH MECMAN, 125 81 Stockholm (SE)
(72) Inventor: Sällberg, Inger, S-125 43 Älvsjö (SE)
(74) Representative: Janson, Ronny

(56) References cited:
- WO-A-93/09352
- WO-A-93/10360
- US-A- 4 846 431
- US-A- 4 877 338

## Description

This invention concerns a device according to the preamble of claim 1 and a fluid pressure cylinder, of the type having a slot, comprising such a device.

Devices of this kind are previously known. US-A-4,877,338 describes a linear power device with a slot cylinder, on its housing being provided with a guide rail which is fastened by means of two profiled strips. Each of the profiled strips cooperate on the one hand with grooves in the cylinder housing, on the other hand with grooves in the guide rail to be fastened. The desired fastening is achieved by clamping the profiled strips together. This known device is complex and costly, inter alia because of the necessity of using a special guide rail having grooves corresponding to the profiled elements. Further, the fastening procedure is complex since mounting in principle must be undertaken axially. Mounting sideways onto the cylinder would require a considerable working length for the screws holding the profiled elements together.

A simpler device is shown in the document WO 93 0935, however the guiding rail is fastened by deformation of a single element.

It is an object of the present invention to eliminate the drawbacks of the previously cited US-A-4 877 338 known art, while maintaining the advantages thereof, namely using the separate guide rail which is fastened to the housing for guiding the linear movement.

This object is achieved in a device according to the above by the features of the characterizing portion of claim 1.

By these features it is achieved that an uncomplicated guide rail may be used and that the fastening screws for the guide rail are used for obtaining the fixation. Further, profiled elements are used which advantageously may be manufactured in a continuous process from an aluminium containing material altogether resulting in a very advantageous solution with respect to costs. The guide rail itself is thus used as a part of a link mechanism in order to obtain an uncomplicated as well as simply and quickly fastenable guide rail device. Further, it is possible to fasten the guide rail directly onto a conventional housing without machining or e.g. making holes therein, said housing being provided with dovetail shaped projections for fastening of various elements.

By the feature of claim 2, effective and accurate linear alignment of the guide rail is achieved very easily during mounting.

By the feature of claim 3, a particularly advantageous construction is obtained including two rail holders which are constructed with mutually co-operating integral pivot surfaces. By the construction of the pivot surfaces it is easy to obtain an effective hinge between the two elements.

By the feature of claim 4, effective grip means are provided for co-operation with corresponding means on the housing.

By the feature of claim 5, possibility of using commercially available standard rails is achieved, thus further enhancing the economic advantages of the solution.

By the feature of claim 6, particularly price effective and simple manufacture is obtained.

The invention also concerns a fluid pressure cylinder of the slot cylinder type which is provided with a device according to any of the claims 1-6.

The invention will now be described in greater detail and by way of embodiments and with reference to the accompanying drawings, wherein:
Fig. 1 shows in section a fluid pressure cylinder having an arrangement for guiding the linear movement according to the invention,
Fig. 2 shows in section parts of fig. 1 in a larger scale,
Fig. 3 shows one of the rail holders in a sectional view, and
Fig. 4 shows the other rail holder in a sectional view.

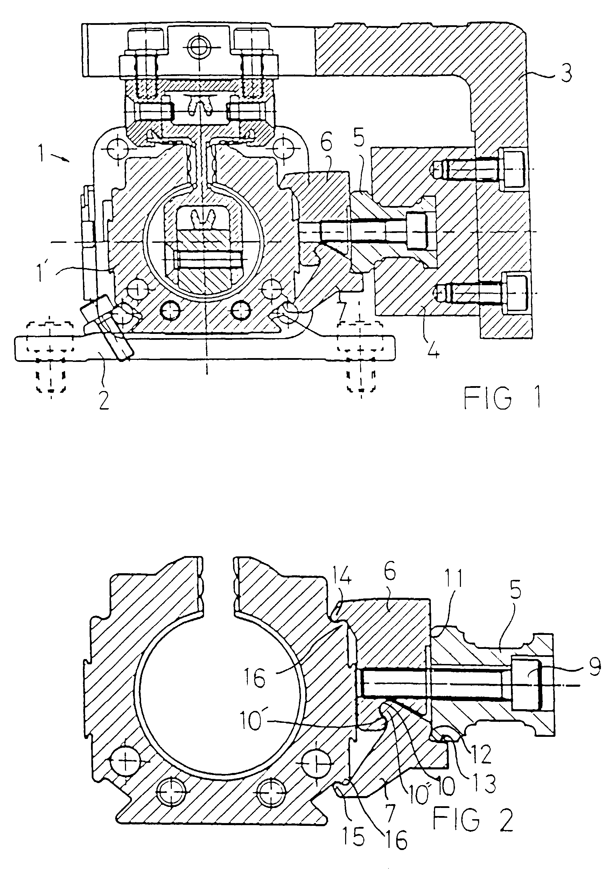

Fig. 1 thus shows a housing 1' having a drive element which is connected over power transferring means 3 to a guiding slide 4. The slide 4 is longitudinally movable along a guide rail 5 which is fixed on the housing 1' by means of an arrangement of rail holders 6 and 7.

As can be seen from fig. 2, the guide rail 5 is fastened by means of fastening screws 9 (one of which is shown in the fig) onto a first rail holder 6, by the fastening screws being in engagement with holes therein. Further, the guide rail 5 is provided with a bore for the fastening screw 9 allowing a certain mutual turning movement between said fastening screw and the guide rail. The guide rail 5 further presses by means of a first pressing surface (at 11), against a first counter-pressure surface (likewise at 11), at the sideways outer portion of that side of the guide rail which is turned against the cylinder. In the area of the opposite edge of said side the guide rail 5 acts with a second pressing surface (at 12) against a second counter-pressure surface (likewise at 12) on the second rail holder 7. Finally, this second rail holder 7 over a strip portion 10" grips into a corresponding groove 10' in the first rail holder 6 such that pivot surfaces (at 10) are formed in the area of contact between the strip portion 10" and the groove 10' so as to allow a limited pivoting movement of the rail holders 6 and 7 relative to each other around this area. The strip portion 10" and the groove 10' are shaped in such a way that the tensioning of the fastening screw 9 binds the said rail holders 6 and 7 to each other, at least in such a way that sliding sidewards of the strip portion out of the groove is prevented.

Sideways most outwards on the sides that in use are turned against the cylinder 1, the rail holders 6 and 7 are provided with first 14 and second 15 strip elements respectively for gripping on corresponding dovetail-shaped projecting engagement elements 16 on the housing.

The embodiment of the invention shown in the figures functions as follows: in an assembled state which is shown in fig. 2, the pivot surfaces at 10 and the first 11 and the second 12 respectively counter-pressure/pressing surfaces form corners of a triangle. By tensioning fastening screws 9 this triangle is deformed in such a way that a plier-like turning of the rail holders 6 and 7 occurs around the pivot surfaces 10, whereby the distance between the first 14 and the second 15 strip element is reduced which in the mounting position will lead to clamping of the entire unit consisting of rail holders 6 and 7 and guide rail 5 and fastening screws 9 onto the engagement element 16 of the housing. In order to facilitate the linear alignment of the guide rail 5, the second rail holder 7 is provided with a strip-like projection 17, which carries a supporting surface 13 extending in an angle with respect to the second counter-pressure surface 12 and said support surface 13 providing a sideward support for a corresponding surface on the guide rail 5.

Suitably, the mounting of the guiding device onto a cylinder is achieved by firstly placing the two rail holders, possibly by aid of a fastening device, with the gripping elements 14, 15 just opposite the corresponding engagement elements 16 on the housing, whereafter the guide rail having the power transmitting means 3, 4 mounted thereon is fastened during continuous control of the alignment of the guide rail by successive tensioning of the fastening screws with a simultaneous displacement movement of the shuttle.

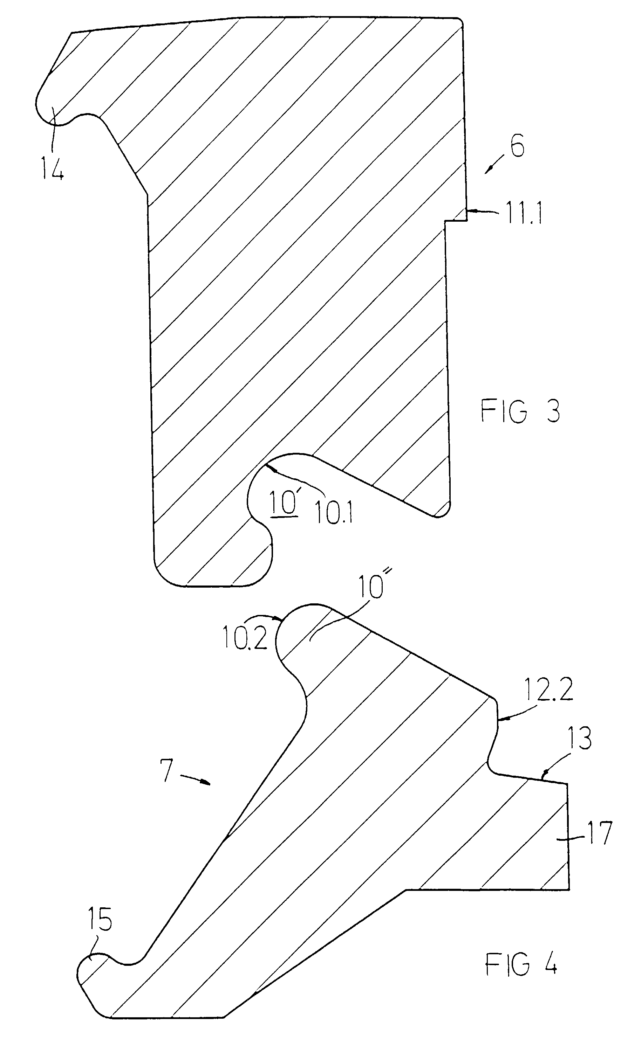

Fig. 3 shows in an enlarged scale the first rail holder 6 with counter-pressure surface 11.1, groove 10' with pivot surface 10.1 and the first strip element 14.

Fig. 4 shows in an enlarged scale the second rail holder 7 with counter-pressure surface 12.2, strip portion 10" with pivot surface 10.2, strip element 15 and, projecting from the cylinder, a projection 17 which on the side which in use is turned against the guide rail provides a supporting surface 13 for support against a corresponding surface on the guide rail.

The invention is not limited to the shown embodiment but only to what is stated in the following claims. It is thus within the scope of this invention also to form the rail holders in three parts, in principle two parts resembling detail 7 and a intermediate supporting portion for providing pivot surfaces and for providing tension against the guide rail by means of the fastening screws. In that case the surfaces form the corners of a quadrangle. It is, however stressed that the shown embodiment is preferred because of a minimal number of components, simpler mounting as well as that added tolerances are limited and thus enhanced alignment accuracy.

By manufacturing the profiles in an extrusion process very simple, costworthy and appropriate production is achieved. In certain applications the extruded profiles may be used directly, in others where greater accuracy is necessary, it may be necessary to straighten the extruded profiles. The material of the rail holders is preferably aluminium or a suitable alloy including aluminium. If the rail holders are not extruded other materials may come into question. Preferably, the rail holders are extending along the entire length of the cylinder which provides particularly good force distribution along the cylinder and contributes to particularly good linear alignment of the guide rail. However, in certain applications where the risk of squeezing or other human damages are eliminated by other measures, a number of devices according to the invention may be distributed axially along the cylinder for fastening a guide rail. These "rail holding packages" are in that case discrete units along the length of the cylinder.

Finally, it may mentioned that a solution according to the invention provides the possibility of constructing a rigid construction having good force withstanding properties. This is particularly important in applications where large masses are moved by the power unit and/or when accelerations are considerable etc. The invention provides a possibility of rugged construction of the guiding device as well as cylinder tubes having engagement surfaces carrying form parts.

## Claims

1. Device for guiding a linear movement of a linear power device (1), having a tube shaped housing (1') and a linearly moving drive element inside said housing, said drive element over power transmitting means (3) being connected to a guiding slide (4), wherein the device for fastening a guide rail (5) for the slide (4) onto the housing includes two separate longitudinal profiled elements constituting rail holders (6,7) which on the one hand are provided with gripping elements (14,15) for co-operation with corresponding engagement elements (16) on the housing, on the other hand with fastening means (9) for co-operation with the guide rail (5), **characterized in**
- that said rail holders (6,7) comprise longitudinal pivot surfaces (10.1,10.2) which are shaped so as to allow a mutual relative pivot movement in directions cross-wise with respect to the length extension of the rail holders,
- that each rail holder (6,7) comprises a longitudinal counter-pressure surface (11.1,12.2) for co-operation with pressing surfaces of the guide rail,
- that said pivot surfaces (10.1,10.2) and counter-pressure/pressing surfaces (at 11,12) in the mounted position of the device form corners of a triangle or a quadrangle, and
- that said fastening means (9) are comprised of fastening screws (9) which are distributed along the guide rail and which are arranged such that in fastening of the device onto said housing (1') the shape of said triangle or quadrangle is deformed and thereby a clamping movement of said gripping elements (14,15) is achieved.

2. Device according to claim 1, **characterized in** that at least one of the rail holders (7) besides said counter pressure surface (12.2) also comprises, at an angle with respect thereto, a supporting surface (13) for co-operation with a corresponding surface on the guide rail (5).

3. Device according to claim 1 or 2, whereby said pivot surfaces (10.1, 10.2) and counter-pressure/pressing surfaces (at 11,12) in the mounted position of the device, form corners of a triangle, **characterized in** that a first pivot surface (10.1) of the first rail holder (6) is formed in a groove (10') having a rounded cross section and that a second pivot surface (10.2), cooperating therewith, on the second rail holder (7) is arranged on a strip portion (10") with a corresponding rounded cross section.

4. Device according to claim 1, **characterized in** that the gripping elements (14,15) comprise opposing strip elements.

5. Device according to any of the previous claims, **characterized in** that the rail holders (6,7) are adapted for co-operation with a standard type guide rail (5).

6. Device according to any of the previous claims, **characterized in** that the guide rails (6,7) are manufactured in an extrusion process.

7. Fluid pressure cylinder (1) of the slot cylinder type, **characterized in** that it is provided with at least one device according to any of the claims 1-6.

## Patentansprüche

1. Vorrichtung zum Führen einer Linearbewegung einer linearen Kraftvorrichtung (1) mit einem rohrförmigen Gehäuse (1') und einem sich linear bewegenden Antriebselement innerhalb des Gehäuses, wobei das Antriebselement über Kraftübertragungsvorrichtungen (3) mit einem Führungsschlitten (4) verbunden ist, wobei die Vorrichtung zum Befestigen einer Führungsschiene (5) für den Schlitten (4) am Gehäuse zwei getrennte, in Längsrichtung profilierte Elemente umfaßt, welche Schienenhalter (6, 7) bilden, die einerseits mit Greifelementen (14, 15) zum Zusammenwirken mit entsprechenden Halteelementen (16) am Gehäuse und andererseits mit Befestigungsvorrichtungen (9) zum Zusammenwirken mit der Führungsschiene (5) versehen sind, **dadurch gekennzeichnet, daß**
- die Schienenhalter (6, 7) in Längsrichtung verlaufende Gelenkflächen (10.1, 10.2) aufweisen, die so geformt sind, daß sie eine gegenseitige relative Schwenkbewegung in Richtungen quer bezüglich der Längserstreckung der Schienenhalter gestatten,
- jeder Schienenhalter (6, 7) eine in Längsrichtung verlaufende Gegendruckfläche (11.1, 12.2) zum Zusammenwirken mit Druckflächen der Führungsschiene aufweist,
- die Gelenkflächen (10.1, 10.2) und Gegendruck-/Druckflächen (bei 11, 12) in der montierten Stellung der Vorrichtung die Ecken eines Dreiecks oder eines Vierecks bilden und
- die Befestigungsvorrichtungen (9) aus Befestigungsschrauben (9) bestehen, die längs der Führungsschiene verteilt und so angeordnet sind, daß beim Befestigen der Vorrichtung an dem Gehäuse (1') die Gestalt des Dreiecks oder Vierecks verformt und dadurch eine Klemmbewegung der Greifelemente (14, 15) erreicht wird.

2. Vorrichtung nach Anspruch 1, **dadurch gekennzeichnet**, **daß** wenigstens einer der Schienenhalter (7) außer der Gegendruckfläche (12.2) auch in einem Winkel dazu eine Stützfläche (13) zum Zusammenwirken mit einer entsprechenden Fläche an der Führungsschiene (5) aufweist.

3. Vorrichtung nach Anspruch 1 oder 2, bei der die Gelenkflächen (10.1, 10.2) und die Gegendruck-/Druckflächen (bei 11, 12) in der montierten Stellung der Vorrichtung die Ecken eines Dreiecks bilden, **dadurch gekennzeichnet**, **daß** eine erste Gelenkfläche (10.1) des ersten Schienenhalters (6) in einer Nut (10') ausgebildet ist, die einen abgerundeten Querschnitt hat, und daß eine zweife Gelenkfläche (10.2), die damit zusammenwirkt, am zweiten Schienenhalter (7) an einem Leistenabschnitt (10") mit einem entsprechenden abgerundeten Querschnitt angeordnet ist.

4. Vorrichtung nach Anspruch 1, **dadurch gekennzeichnet, daß** die Greifelemente (14, 15) von gegenüberliegenden Leistenelementen gebildet sind.

5. Vorrichtung nach einem der vorangehenden Ansprüche, **dadurch gekennzeichnet, daß** die Schienenhalter (6, 7) zum Zusammenwirken mit einer Führungsschiene (5) vom Standardtyp angepaßt sind.

6. Vorrichtung nach einem der vorangehenden Ansprüche, **dadurch gekennzeichnet, daß** die Schienenhalter (6, 7) in einem Extrusionsverfahren hergestellt sind.

7. Fluiddruckzylinder (1) vom Schlitzzylindertyp, **dadurch gekennzeichnet, daß** er mit wenigstens einer Vorrichtung gemäß einem der Ansprüche 1 - 6 ausgerüstet ist.

## Revendications

1. Dispositif pour le guidage d'un mouvement linéaire d'un dispositif moteur linéaire (1), ayant un corps (1') en forme de tube et un élément d'entraînement se déplaçant linéairement à l'intérieur dudit corps, ledit élément d'entraînement étant relié, par un moyen (3) de transmission de force, à un coulisseau (4) de guidage, dans lequel le dispositif pour la fixation d'un rail (5) de guidage pour le coulisseau (4) sur le corps comprend deux éléments profilés longitudinaux séparés constituant des supports (6, 7) de rail qui, d'une part, sont pourvus d'éléments (14, 15) de prise destinés à coopérer avec des éléments d'engagement correspondants (16) sur le corps et, d'autre part, sont pourvus de moyens (9) de fixation destinés à coopérer avec le rail (5) de guidage, caractérisé en ce que
- lesdits supports (6, 7) de rail comprennent deux surfaces longitudinales (10.1, 10.2) de pivotement qui sont configurées de façon à permettre un mouvement de pivotement relatif mutuel dans les directions transversales par rapport à l'étendue longitudinale des supports de rail,
- chaque support (6, 7) de rail comporte une surface longitudinale (11.1, 12.2) de contre-pression destinée à coopérer avec des surfaces de pression du rail de guidage,
- lesdites surfaces de pivotement (10.1, 10.2) et lesdites surfaces de contre-pression/pression (en 11, 12), dans la position montée du dispositif, forment des angles d'un triangle ou d'un quadrilatère, et
- lesdits moyens (9) de fixation sont constitués de vis (9) de fixation qui sont réparties le long du rail de guidage et qui sont agencées de manière que, dans la fixation du dispositif sur ledit corps (1'), la forme dudit triangle ou dudit quadrilatère soit déformée et, ainsi, qu'un mouvement de bridage desdits éléments de prise (14, 15) soit obtenu.

2. Dispositif selon la revendication 1, caractérisé en ce qu'au moins l'un des supports (7) de rail présente aussi, en plus de ladite surface (12.2) de contre-pression, formant un angle avec elle, une surface (13) de support destinée à coopérer avec une surface correspondante située sur le rail (5) de guidage.

3. Dispositif selon la revendication 1 ou 2, dans lequel lesdites surfaces de pivotement (10.1, 10.2) et lesdites surfaces de contre-pression/pression (en 11, 12), dans la position montée du dispositif, forment des angles d'un triangle, caractérisé en ce qu'une première surface de pivotement (10.1) du premier support (6) de rail est formée dans une gorge (10') ayant une section transversale arrondie et en ce qu'une seconde surface de pivotement (10.2), coopérant avec elle, sur le second support (7) de rail, est agencée sur une partie en forme de bande (10") ayant une section transversale arrondie correspondante.

4. Dispositif selon la revendication 1, caractérisé en ce que les éléments de prise (14, 15) comprennent des éléments opposés en forme de bandes.

5. Dispositif selon l'une quelconque des revendications précédentes, caractérisé en ce que les supports (6, 7) de rail sont conçus pour coopérer avec un rail de guidage (5) de type classique.

6. Dispositif selon l'une quelconque des revendications précédentes, caractérisé en ce que les rails de guidage (6, 7) sont fabriqués par un procédé d'extrusion.

7. Cylindre (1) à pression de fluide du type cylindre fendu, caractérisé en ce qu'il est pourvu d'au moins un dispositif selon l'une quelconque des revendications 1 à 6.
